# EUROPÄISCHE PATENTSCHRIFT

(11) **EP 3 595 876 B1**
(45) Veröffentlichungstag und Bekanntmachung des Hinweises auf die Patenterteilung: **26.05.2021**
(21) Anmeldenummer: 18709480.0
(22) Anmeldetag: 15.02.2018
(51) Int. Cl.: B29C 70/04, B29C 70/54, B29C 37/00, B29C 45/14, B29C 65/70, B29C 65/00

(54) **VERFAHREN ZUR HERSTELLUNG EINES KUNSTSTOFFBAUTEILS**
METHOD FOR PRODUCING A PLASTICS COMPONENT
PROCÉDÉ DE FABRICATION D'UN COMPOSANT EN MATIÈRE PLASTIQUE

(30) Priorität: 14.03.2017 DE 102017105358
(43) Veröffentlichungstag der Anmeldung: 22.01.2020
(73) Patentinhaber: Plan B Engineering Solutions GmbH, 60596 Frankfurt am Main (DE)
(72) Erfinder: KRETZSCHMAR, Kai, 63512 Hainburg (DE)
(74) Vertreter: Habermann Intellectual Property Partnerschaft von Patentanwälten mbB
(86) Internationale Anmeldenummer: PCT/EP2018/053811
(87) Internationale Veröffentlichungsnummer: WO 2018/166746

(56) Entgegenhaltungen:
- WO-A1-2016/034478
- DE-A1- 19 608 127
- US-A1- 2016 075 061

## Beschreibung

Die Erfindung betrifft ein Verfahren zur Herstellung eines Kunststoffbauteils aus einer mehrschichtigen Kunststoffplatte, wobei die Kunststoffplatte eine Deckschicht aus gestreckten Kunststofffasern aufweist.

Aus dem Stand der Technik sind eine Vielzahl von Ausführungsformen von mehrschichtigen Kunststoffplatten bekannt die einen Kunststoffkern aufweisen, auf den eine Deckschicht aus einem Kunststofffasergewebe aufgebracht ist. Insbesondere bei Anwendungen, die hohe Anforderungen an die Haltbarkeit, Belastbarkeit und Schadensresistenz der Kunststoffplatte stellen, kommen häufig Faserverbundwerkstoffe als Material für die Deckschicht zur Anwendung. Faserverbundwerkstoffe aus Kunststoff weisen sowohl Fasern als auch eine Matrix aus Kunststoff auf. Durch ihre hohe Zugfestigkeit verleihen die Fasern dem Faserverbundwerkstoff eine hohe Schlagfestigkeit, wobei die Matrix die Fasern einbettet und räumlich fixiert. Da Fasern ihre größte Belastbarkeit entlang der Faserrichtung haben, eine rein unidirektionale Belastung praktisch jedoch sehr selten vorkommt, werden die Fasern in der Regel zu Matten verwoben in denen die Fasern in einem Winkel zueinander ausgerichtet sind. Derartige Fasermatten werden dann in das Matrixmaterial eingebettet, wobei der Kunststoff aus dem die Faser besteht der gleiche sein kann wie der, aus dem die Matrix besteht.

Abhängig vom Fasermaterial kann es vorteilhaft sein, dass die Kunststofffasern vorgestreckt werden, beispielsweise bei Fasern aus Polypropylen. Durch die Vorspannung der Fasern vor dem Einbringen in die Matrix kann die Schlagfestigkeit des entstehenden Faserverbundwerkstoffes erhöht werden, vorausgesetzt, dass die Verbindung zwischen Fasern und Matrix bei der weiteren Bearbeitung eines Werkstückes aus dem Faserverbundwerkstoff erhalten werden kann.

Bei der Ausgestaltung der Kerne von mehrschichtigen Kunststoffplatten ist ebenfalls eine Vielzahl von Ausführungsformen bekannt. Der Kern soll der Kunststoffplatte eine möglichst hohe Biegesteifigkeit verleihen und den Verbund aus Deckschicht und Kern stabilisieren und somit die Kunststoffplatte als Konstruktionselement einsetzbar machen. Um mit möglichst geringem Materialeinsatz eine hohe Stabilität zu erreichen hat sich der so genannte Wabenkern als besonders geeignet herausgestellt. Bei bestimmten Anwendungen, wenn beispielsweise eine geringere Biegesteifigkeit ausreicht oder die mehrschichtige Kunststoffplatte sehr billig sein muss, kommen neben dem Wabenkern auch noch massive Kerne oder geschäumte Kerne zur Anwendung.

In der Druckschrift WO 2016/034478 A1 wird ein Verfahren zur Herstellung mehrschaliger Verbundwerkstoffbauteile beschrieben. Das Verfahren umfasst die Schritte des Einlegens mindestens eines ersten Bauteils in ein Spritzgusswerkzeug und gegebenenfalls ein Umformen des ersten Bauteils, ein Anspritzen mindestens eines Fixierungselementes auf mindestens eine Seite des ersten Bauteils und ein Einlegen mindestens eines zweiten Bauteils in das Spritzgusswerkzeug und gegebenenfalls ein Umformen des zweiten Bauteils, ein Verbinden des ersten Bauteils über die das Fixierungselement aufweisende Seite mit dem zweiten Bauteil. Dabei wird durch das zweite Bauteil hindurch auf und/oder in das Fixierungselement ein Matrixwerkstoff eingespritzt.

In der Druckschrift US 2016/075061 A1 wird ein Verfahren zur Steigerung der strukturellen Leistungsfähigkeit, Festigkeit und Haltbarkeit textilverstärkter Verbundwerkstoffe beschrieben. Dabei wird ein Textilverstärkungselement, welches beispielsweise gestrickt wurde, durch Aufbringung einer Spannung in einem Bereich des Textilverstärkungselement vorgespannt. In den vorgespannten Bereich des Textilverstärkungselements wird ein Prepolymer eingebracht. Das Prepolymer kann dann gehärtet oder verfestigt werden, woraufhin die angelegte Spannung aufgehoben wird, um den Verbundgegenstand aus Polymer und des vorgespannten Textilverstärkungselements zu bilden.

In der Druckschrift DE 196 608 127 A1 wird ein Verfahren zur Herstellung eines dreidimensional geformten Faserverbundbauteils, insbesondere eines
Kraftfahrzeugbodens offenbart. Das dreidimensional geformte Faserverbundbauteil besteht aus einer aus übereinander liegenden Langfaserlagen aufgebauten Grundstruktur und an dieser in den Bereichen erhöhter Belastung angebrachten, örtlichen Verstärkungsteilen. Dabei sind die Langfaserlagen im unverformten Zustand zusammen mit den örtlichen Verstärkungsteilen zu einem planaren, integralen Faserhalbzeug vernäht. Das Faserhalbzeug wird anschließend als Ganzes in einem Pressformwerkzeug unter Druck- und Wärmeeinwirkung in die dreidimensionale Bauteilgeometrie umgeformt und zum fertigen Faserverbundbauteil konsolidiert.

Alle beschriebenen Ausführungsformen von mehrschichtigen Kunststoffplatten zeichnen sich durch eine vergleichsweise hohe Festigkeit bei einem vergleichsweise geringen Gewicht aus. Die Kunststoffplatten können daher in einigen Einsatzbereichen als Ersatz für vergleichsweise schwere Materialien wie beispielsweise Stahlbleche eingesetzt werden. Ein mögliches Anwendungsgebiet ist hierbei die Verwendung der Kunststoffplatten im Automobilbereich beispielsweise als Ersatz für Unterbodenbleche.

Um die Kunststoffplatten mit weiteren Karosserieteilen verbinden zu können, ist es erforderlich, geeignete Verbindungselemente an den Kunststoffplatten anzuordnen. Hierzu werden derzeit beispielsweise klassische Schraub- oder Nietverbindungen verwendet. Bei derartigen Schraub- oder Nietverbindungen hat es sich jedoch als nachteilig erwiesen, dass durch die Störung des Faserverlaufs im Bereich einer Ausnehmung, die für eine solche Art von Verbindung zwingend erforderlich ist, ein Faser-Matrix-Verbund in seiner Gesamtheit geschwächt wird. Bei abtragenden Verfahren, wie beispielsweise Bohren oder Fräsen, kommt es zu einer Schädigung und/ oder Zerstörung der Faser im Bereich einer Bearbeitungsstelle und teilweise, beispielsweise durch thermische Belastung durch die Bearbeitung, auch darüber hinaus. Dem kann nach dem Stand der Technik nur durch spezielle und kostenintensive Bearbeitungsverfahren oder durch ein Nacharbeiten der Ausnehmung begegnet werden. Daneben ist es auch möglich Ausnehmungen in mehrschichtigen Kunststoffplatten dadurch zu realisieren, dass die Ausnehmung schon beim Herstellen des Verbunds aus Faser und Matrix ausgebildet wird, so dass die Fasern geordnet um die Ausnehmung herum geführt/ angeordnet werden können. Diese Vorgehensweise setzt jedoch kostenintensive und anwendungsspezifische Werkzeuge voraus.

Neben den bereits angeführten Nachteilen ist bei Ausnehmungen weiterhin ungünstig, dass die Ausnehmungen als Kraftübertragungspunkte innerhalb eines Bauteils die Entstehung von Spannungsspitzen begünstigen und eine gleichmäßige Kraftübertragung zwischen Konstruktionselementen erschweren, was besonders bei Faserverbundwerkstoffen sehr nachteilig ist.

Als Aufgabe der Erfindung wird es angesehen, ein Verfahren zur Herstellung eines Kunststoffbauteils aus einer mehrschichtigen Kunststoffplatte bereitzustellen, wobei das Kunststoffbauteil besonders einfach mit weiteren Komponenten verbunden werden kann.

Diese Aufgabe wird erfindungsgemäß durch ein Verfahren zur Herstellung eines Kunststoffbauteils aus einer mehrschichtigen Kunststoffplatte gelöst, wobei die Kunststoffplatte eine Deckschicht aus gestreckten Kunststofffasern aufweist, wobei in einem Formschritt ein Formbauteil aus der Kunststoffplatte hergestellt wird, wobei in einem Oberflächenvorbereitungsschritt ein Haftvermittler mindestens in einem Verbindungsbereich der Deckschicht auf die Deckschicht aufgebracht wird, wobei in einem Spritzvorbereitungsschritt ein den Verbindungsbereich der Deckschicht einschließender Niederhalter an die Deckschicht angedrückt wird, um eine vorgegebene Streckung der Kunststofffaser in dem Verbindungsbereich zu fixieren und wobei nach dem Andrücken der Niederhalter ein Spritzkunststoffelement in einem Spritzschritt aus einem Spritzkunststoff an die Deckschicht in dem Verbindungsbereich angespritzt wird. Auf diese Weise können an die Deckschicht der Kunststoffplatte weitere Komponenten und insbesondere Verbindungselemente zur Verbindung des Kunststoffbauteils beispielsweise mit einer Fahrzeugkarosserie angespritzt werden.

Hierbei sorgt der Haftvermittler für eine ausreichende Haftung des angespritzten Kunststoffs an der Deckschicht der Kunststoffplatte. Der Haftvermittler ist erfindungsgemäß so an ein für die Herstellung der Kunststofffasern verwendetes Kunststofffasermaterial und den Spritzkunststoff angepasst, dass die ausreichende Haftung erreicht werden kann. Der Haftvermittler kann flüssig verwendet und erfindungsgemäß über einen Schwamm oder einen Pinsel in dem Verbindungsbereich auf eine Oberfläche des FKV-Bauteils aufgebracht werden. Alternativ kann der Haftvermittler erfindungsgemäß auch auf das FKV-Bauteil aufgesprüht oder mit einem geeigneten Beschichtungsverfahren wie zum Beispiel durch Bedampfung auf das FKV-Bauteil aufgebracht werden.

Durch die Verwendung des Niederhalters kann vorteilhafterweise erreicht werden, dass die Streckung der Kunststofffasern bei der durch das Aufbringen der erwärmten Spritzgussmasse erfolgenden Erwärmung der Kunststofffasern erhalten bleibt. Zu diesem Zweck ist der Niederhalter erfindungsgemäß so an die Deckschicht angedrückt, dass sämtliche Fasern innerhalb des Verbindungsbereichs fixiert sind, so dass sich keine Faser bei der Erwärmung der Fasern in dem Verbindungsbereich elastisch verformen kann. Der Niederhalter weist erfindungsgemäß eine an den Verbindungsbereich angepasste und den Verbindungsbereich umschließende Andrückfläche auf. Die Andrückfläche ist vorteilhafterweise streifenförmig ausgestaltet und kann erfindungsgemäß einen vieleckigen oder runden Verlauf aufweisen. Der Niederhalter kann einteilig oder mehrteilig ausgestaltet sein.

Erfindungsgemäß ist vorteilhafterweise vorgesehen, dass das Spritzkunststoffelement aus mindestens zwei Spritzkunststoffarten hergestellt ist, wobei ein erster Abschnitt des Spritzkunststoffelements aus einem ersten Spritzkunststoff an der Deckschicht angeordnet wird und ein zweiter Abschnitt des Spritzkunststoffelements aus einem zweiten Spritzkunststoff an dem ersten Abschnitt angeordnet wird. Bei dem ersten Spritzkunststoff handelt es sich erfindungsgemäß vorteilhafterweise um eine Weichkomponente und bei dem zweiten Spritzkunststoff vorteilhafterweise um eine Hartkomponente. Beispielsweise kann es sich bei der Hartkomponente um einen thermoplastischen amorphen oder teilkristallinen Kunststoff und bei der Weichkomponente um einen thermoplastischen Elastomer, Gummi oder Kautschuk handeln. Erfindungsgemäß kann durch die Verwendung einer Weichkomponente in unmittelbarer Verbindung mit der Deckschicht und einer Hartkomponente des Spritzkunststoffelements eine gewünschte Elastizität der Bauteilverbindung erreicht werden, um beispielsweise unterschiedliche material- und temperaturabhängige
Ausdehnungen der Deckschicht und des
Spritzkunststoffelements ausgleichen zu können.

Erfindungsgemäß ist vorteilhafterweise vorgesehen, dass das Spritzkunststoffelement an die Deckschicht durch ein Spritzgussverfahren angespritzt wird. Beim
Spritzgussverfahren können vorteilhafterweise auch Spritzkunststoffelemente aus zwei Spritzkunststoffarten einfach mit einer Spritzgussmaschine hergestellt werden. Zu diesem Zweck können Transfer-, Dreh- und Schiebertechnik-Werkzeuge eingesetzt werden. Vorteilhafterweise wird eine mit einem Drehteller ausgerüstete Spritzgussmaschine zur Herstellung des Spritzkunststoffelements aus zwei Spritzkunststoffarten verwendet. Hierbei kann vorteilhafterweise zunächst eine Weichkomponente auf die Deckschicht aufgespritzt und anschließend eine Hartkomponente auf die Weichkomponente gespritzt werden. Durch die unmittelbar aufeinanderfolgende Herstellung des Spritzkunststoffelements auch aus mehreren Spritzkunststoffarten auf einer Spritzgussmaschine ist eine besonders schnelle und kostengünstige Herstellung des Bauelements möglich.

Vorteilhafterweise ist erfindungsgemäß vorgesehen, dass das Spritzkunststoffelement in mehreren beabstandet zueinander angeordneten Verbindungsbereichen an der Deckschicht angeordnet wird. Auf diese Weise kann eine bessere und besonders stabile Verbindung zwischen der Deckschicht und dem Spritzkunststoffelement hergestellt werden, da die zwischen der Deckschicht und dem Spritzkunststoffelement zu übertragenden Kräfte über mehrere Verbindungsbereiche übertragen werden. Zudem können auf diese Weise auch komplex gestaltete Spritzkunststoffelemente hergestellt werden.

Vorteilhafterweise ist erfindungsgemäß vorgesehen, dass die mehrschichtige Kunststoffplatte zwei Deckschichten aus den gestreckten Kunststofffasern und eine zwischen den Deckschichten angeordnete Zwischenschicht aus einem Zwischenschichtkunststoff aufweist. Die Zwischenschicht ist vorteilhafterweise wabenförmig ausgestaltet. Bei dem Zwischenschichtkunststoff handelt es sich erfindungsgemäß um Polypropylen.

Bei einer besonders vorteilhaften Ausgestaltung des erfindungsgemäßen Verfahrens ist vorgesehen, dass das Formbauteil in dem Formschritt durch Umformen, Schneiden und/oder Stanzen aus der Kunststoffplatte hergestellt wird. Grundsätzlich ist es möglich, die Kunststoffplatte durch verschiedene und aus dem Stand der Technik bekannte Verfahren zu bearbeiten.

Vorteilhafterweise ist erfindungsgemäß vorgesehen, dass der Oberflächenvorbereitungsschritt vor dem Formschritt durchgeführt wird, wobei der Haftvermittler durch eine Vermittlerfolie auf die Oberfläche aufgebracht wird. Auf diese Weise kann die Kunststoffplatte einfach für die Weiterverarbeitung und das Anspritzen vorbereitet werden, wobei die Vermittlerfolie gegebenenfalls bereits bei der Herstellung der Kunststoffplatte auf die Deckschicht aufgebracht werden kann.

Erfindungsgemäß ist vorteilhafterweise vorgesehen, dass der Spritzvorbereitungsschritt vor oder gleichzeitig mit dem
Formschritt erfolgt. Dadurch, dass der Niederhalter bereits vor oder während der formgebenden Bearbeitung der Kunststoffplatte an der Kunststoffplatte angeordnet wird, kann der Herstellungsprozess des Kunststoffbauteils erheblich beschleunigt werden, da das Anspritzen des Spritzkunststoffelements an das Formbauteil unmittelbar auf den Spritzvorbereitungsschritt folgend durchgeführt werden kann.

Vorteilhafterweise ist erfindungsgemäß vorgesehen, dass der Oberflächenvorbereitungsschritt nach dem
Spritzvorbereitungsschritt erfolgt. Es ist aber auch möglich und erfindungsgemäß vorgesehen, dass der Oberflächenvorbereitungsschritt vor dem
Spritzvorbereitungsschritt durchgeführt wird.

Um den Herstellungsprozess weiter zu beschleunigen, ist erfindungsgemäß vorgesehen, dass der Spritzschritt gleichzeitig mit dem Formschritt erfolgt. Das Spritzkunststoffelement kann vorteilhafterweise beispielsweise während des Umformens an die Deckschicht angespritzt werden.

Es ist aber auch möglich und erfindungsgemäß vorgesehen, dass der Spritzvorbereitungsschritt nach dem Formschritt erfolgt. Auf diese Weise können einfach bereit vorhandene Bearbeitungsmaschinen für die Durchführung des Verfahrens verwendet werden.

Erfindungsgemäß ist vorteilhafterweise auch ein Verfahren zur Verbindung zweier aus mindestens einer mehrschichtigen Kunststoffplatte hergestellten Formbauteile vorgesehen, wobei die mehrschichtige Kunststoffplatte zwei Deckschichten aus den gestreckten Kunststofffasern und eine zwischen den Deckschichten angeordnete Zwischenschicht aus einem Zwischenschichtkunststoff aufweist, wobei in einem Vorbereitungsschritt die Formbauteile so angeordnet werden, dass Randabschnitte der Zwischenschichten der Formbauteile in einem Verbindungsabstand zueinander angeordnet sind, wobei in einem Verbindungsschritt zwischen die Randabschnitte ein Verbindungskunststoff durch Spritzgießen eingebracht wird. Auf diese Weise können mehrere Formbauteile einfach miteinander verbunden werden.

Um zu vermeiden, dass beim Einbringen des
Verbindungskunststoffs die Deckschichten der Kunststoffplatten durch die hohen Temperaturen des Verbindungskunststoffs beim Spritzgießen beschädigt werden, ist erfindungsgemäß vorgesehen, dass nach dem Vorbereitungsschritt in einem Fixierschritt mindestens ein einen an den Randbereich angrenzenden Deckschichtbereich der Deckschichten der nebeneinander angeordneten Kunststoffplatten einschließender Niederhalter an die Deckschichten angedrückt wird, um eine vorgegebene Streckung der Kunststofffasern in dem Deckschichtbereich zu fixieren.

Die Erfindung betrifft auch ein Kunststoffbauteil aus einem aus einer mehrschichtigen Kunststoffplatte hergestellten Formbauteil und einem an das Formbauteil angespritzten Spritzkunststoffelement, wobei das Kunststoffbauteil wie vorangehend beschrieben hergestellt wurde. Solche Kunststoffbauteile eignen sich zum Beispiel als Ersatz für Unterbodenbleche für Kraftfahrzeuge. Das Kunststoffbauteil kann erfindungsgemäß die bereits im Zusammenhang mit dem Herstellungsverfahren beschriebenen Komponenten und Elemente unabhängig voneinander aufweisen. Im Hinblick auf die verschiedenen Ausgestaltungen wird daher auf die voranstehenden Erläuterungen verwiesen.

Um das Kunststoffbauteil auch in Bereichen einsetzen zu können, die erhöhten Temperaturen ausgesetzt sind, ist erfindungsgemäß vorgesehen, dass das Spritzkunststoffelement aus einem bis zu einer vorgegebenen Temperatur temperaturbeständigen Spritzkunststoff hergestellt ist und in einem Hochtemperaturbereich des Kunststoffbauteils, indem bei bestimmungsgemäßer Verwendung des Kunststoffbauteils erhöhte Temperaturen auf das Kunststoffbauteil einwirken, vollflächig auf die Deckschicht aufgespritzt ist. Es ist aber auch möglich und erfindungsgemäß vorgesehen, dass das Spritzkunststoffelement einen den Hochtemperaturbereich umschließendes Halteelement bildet, durch das die Streckung der Kunststofffasern auch bei höheren Temperaturen aufrechterhalten wird. Die Wirkung dieses Halteelements ist dabei vergleichbar mit der Wirkung des Niederhalters.

Weitere vorteilhafte Ausgestaltungen des erfindungsgemäßen Verfahrens und des erfindungsgemäßen Bauelements werden anhand von in der Zeichnung dargestellten
Ausführungsbeispielen näher erläutert.

Es zeigt:

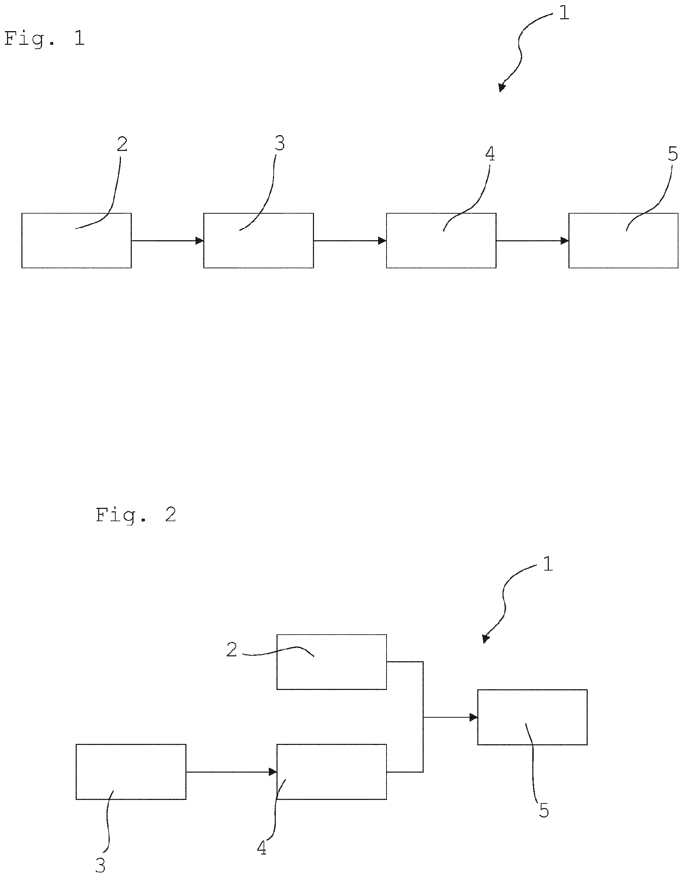

Figur 1 und 2 schematische Darstellungen des erfindungsgemäßen Verfahrens.
Figuren 1 und 2 zeigen schematische Darstellungen des erfindungsgemäßen Verfahrens 1. Zunächst wird in einem Formschritt 2 ein Formbauteil aus einer mehrschichtigen Kunststoffplatte hergestellt. Zu diesem Zweck können bekannte Herstellungsverfahren wie beispielsweise das Umformen, Schneiden und Stanzen verwendet werden. Die Kunststoffplatte weist eine Deckschicht aus gestreckten Kunststofffasern auf.

In einem Oberflächenvorbereitungsschritt 3 wird ein Haftvermittler in einem Verbindungsbereich der Deckschicht auf die Deckschicht aufgebracht. In einem
Spritzvorbereitungsschritt 4 wird ein den

Verbindungsbereich der Deckschicht einschließender Niederhalter an die Deckschicht angedrückt und eine vorgegebene Streckung der Kunststofffasern in dem Bereich fixiert. Bei dem in Figur 1 dargestellten Ablauf des erfindungsgemäßen Verfahrens 1 erfolgen der Oberflächenvorbereitungsschritt 3 und der Spritzvorbereitungsschritt 4 nach dem Formschritt 2, während bei dem in Figur 2 dargestellten Ablauf der Oberflächenvorbereitungsschritt 3 vor dem Formschritt 2 und der Spritzvorbereitungsschritt 4 gleichzeitig mit dem Formschritt 2 erfolgt.

Grundsätzlich sind auch weitere zeitliche Abläufe der verschiedenen Schritte denkbar, wobei ein Spritzschritt 5, in dem ein Spritzkunststoffelement aus einem Spritzkunststoff an den Verbindungsbereich angespritzt wird grundsätzlich nach dem Andrücken der Niederhalter in dem Spritzvorbereitungsschritt 4 erfolgt. Beispielsweise ist es denkbar und erfindungsgemäß vorgesehen, dass der Oberflächenvorbereitungsschritt 3 vor, nach oder gleichzeitig mit dem Spritzvorbereitungsschritt 4 erfolgt.

## Patentansprüche

1. Verfahren (1) zur Herstellung eines Kunststoffbauteils aus einer mehrschichtigen Kunststoffplatte,
**dadurch gekennzeichnet,dass**
die Kunststoffplatte eine Deckschicht aus gestreckten Kunststofffasern aufweist;
in einem Formschritt (2) ein Formbauteil aus der Kunststoffplatte hergestellt wird;
in einem Oberflächenvorbereitungsschritt (3) ein Haftvermittler mindestens in einem Verbindungsbereich der Deckschicht auf die Deckschicht aufgebracht wird;
in einem Spritzvorbereitungsschritt (4) ein den Verbindungsbereich der Deckschicht einschließender Niederhalter an die Deckschicht angedrückt wird, um eine vorgegebene Streckung der Kunststofffasern in dem Verbindungsbereich zu fixieren; und
nach dem Andrücken der Niederhalter ein Spritzkunststoffelement in einem Spritzschritt (5) aus einem Spritzkunststoff in dem Verbindungsbereich an die Deckschicht angespritzt wird.

2. Verfahren (1) gemäß Anspruch 1, **dadurch gekennzeichnet, dass** die mehrschichtige Kunststoffplatte zwei Deckschichten aus den gestreckten Kunststofffasern und eine zwischen den Deckschichten angeordnete Zwischenschicht aus einem Zwischenschichtkunststoff aufweist.

3. Verfahren (1) gemäß Anspruch 1 oder Anspruch 2, **dadurch gekennzeichnet, dass** das Formbauteil in dem Formschritt (2) durch Umformen, Schneiden und/oder Stanzen aus der Kunststoffplatte hergestellt wird.

4. Verfahren (1) gemäß einem der voranstehenden Ansprüche, **dadurch gekennzeichnet, dass** der Oberflächenvorbereitungsschritt (3) vor dem Formschritt (2) durchgeführt wird, wobei der Haftvermittler durch eine Vermittlerfolie auf die Oberfläche aufgebracht wird.

5. Verfahren (1) gemäß einem der voranstehenden Ansprüche, **dadurch gekennzeichnet, dass** der Spritzvorbereitungsschritt (4) vor oder gleichzeitig mit dem Formschritt (2) erfolgt.

6. Verfahren (1) gemäß einem der voranstehenden Ansprüche, **dadurch gekennzeichnet, dass** der Spritzschritt (5) gleichzeitig mit dem Formschritt (2) erfolgt.

7. Verfahren (1) gemäß einem Ansprüche 1 bis 4, **dadurch gekennzeichnet, dass** der Spritzvorbereitungsschritt (4) nach dem Formschritt (2) erfolgt.

8. Kunststoffbauteil aus einem aus einer mehrschichtigen Kunststoffplatte hergestellten Formbauteil und einem an das Formbauteil angespritzten Spritzkunststoffelement, **dadurch gekennzeichnet, dass** das Kunststoffbauteil mit dem Verfahren (1) gemäß einem der Ansprüche 1 bis 7 hergestellt ist.

## Claims

1. A method (1) for producing a plastics component from a multi-layer plastics plate, **characterised in that** the plastics plate has a surface layer composed of stretched plastics fibres;
in a shaping step (2), a shaped component is produced from the plastics plate;
in a surface preparation step (3), an adhesion promoter is applied to the surface layer at least in a connecting region of the surface layer;
in an injection-moulding preparation step (4), a hold-down means which encompasses the connecting region of the surface layer is pressed on the surface layer in order to fix a predefined stretch of the plastics fibres in the connecting region; and
after the pressing-on of the hold-down means, in an injection-moulding step (5) an injection-moulded plastics element made of an injection-moulded plastic is moulded on to the surface layer in the connecting region.

2. The method (1) according to claim 1, **characterised in that** the multi-layer plastics plate has two surface layers composed of the stretched plastics fibres and an intermediate layer composed of an intermediate layer plastic arranged between the surface layers.

3. The method (1) according to claim 1 or claim 2, **characterised in that**, in the shaping step (2), the shaped component is produced from the plastics plate by forming, cutting and/or stamping.

4. The method (1) according to one of the preceding claims, **characterised in that** the surface preparation step (3) is carried out before the shaping step (2), wherein the adhesion promoter is applied on to the surface using a promoter film.

5. The method (1) according to one of the preceding claims, **characterised in that** the injection-moulding preparation step (4) takes place before or at the same time as the shaping step (2).

6. The method (1) according to one of the preceding claims, **characterised in that** the injection-moulding step (5) takes place at the same time as the shaping step (2).

7. The method (1) according to one of claims 1 to 4, **characterised in that** the injection-moulding preparation step (4) takes place after the shaping step (2).

8. A plastics component composed of a shaped component produced from a multi-layer plastics plate and an injection-moulded plastics element moulded on to the shaped component, **characterised in that** the plastics component is produced by the method (1) according to one of claims 1 to 7.

## Revendications

1. Procédé (1) de fabrication d'un composant en matière plastique à partir d'un panneau multicouche en matière plastique,
**caractérisé en ce que**
le panneau en matière plastique comporte une couche extérieure en fibres de matière plastique étirées ;
dans une étape de formage (2), un composant formé est fabriqué à partir du panneau en matière plastique ;
dans une étape de préparation de surface (3), un promoteur d'adhérence est appliqué sur la couche extérieure au moins dans une zone de liaison de la couche extérieure ;
dans une étape de préparation à l'injection (4), un dispositif de serre-flan, enfermant la partie de liaison de la couche extérieure, est pressé sur la couche extérieure pour fixer un étirage prédéfini des fibres de matière plastique dans la zone de liaison ; et
après la pression du dispositif de serre-flan, un élément en matière plastique pour injection est injecté, dans une étape d'injection (5), sur la couche extérieure à partir d'une matière plastique pour injection, dans la zone de liaison.

2. Procédé (1) selon la revendication 1, **caractérisé en ce que** le panneau multicouche en matière plastique comporte deux couches extérieures en fibres de matière plastique étirées et une couche intermédiaire en une matière plastique de couche intermédiaire disposée entre les couches extérieures.

3. Procédé (1) selon la revendication 1 ou la revendication 2, **caractérisé en ce que**, dans l'étape de formage (2), le composant formé est fabriqué à partir du panneau en matière plastique par déformation plastique, coupe et/ou poinçonnage.

4. Procédé (1) selon l'une des revendications précédentes, **caractérisé en ce que** l'étape de préparation de surface (3) est effectuée avant l'étape de formage (2), le promoteur d'adhérence étant appliqué sur la surface par une feuille de promoteur d'adhérence.

5. Procédé (1) selon l'une des revendications précédentes, **caractérisé en ce que** l'étape de préparation à l'injection (4) est effectuée avant ou en même temps que l'étape de formage (2).

6. Procédé (1) selon l'une des revendications précédentes, **caractérisé en ce que** l'étape d'injection (5) est effectuée en même temps que l'étape de formage (2).

7. Procédé (1) selon l'une des revendications 1 à 4, **caractérisé en ce que** l'étape de préparation à l'injection (4) est effectuée après l'étape de formage (2).

8. Composant en matière plastique constitué d'un composant formé fabriqué à partir d'un panneau multicouche en matière plastique et d'un élément en matière plastique pour injection injecté sur le composant formé, **caractérisé en ce que** le composant en matière plastique est fabriqué avec un procédé (1) selon l'une des revendications 1 à 7.
